# EUROPÄISCHE PATENTANMELDUNG

(11) **EP 1 702 690 A2**
(43) Veröffentlichungstag der Anmeldung: **20.09.2006**
(21) Anmeldenummer: 06003119.2
(22) Anmeldetag: 16.02.2006
(51) Int. Cl.: B05D 7/24, B01J 2/00

(54) **Verfahren zum Dispergieren und Behandeln von Partikeln**

(30) Priorität: 15.03.2005 DE 102005011876
(71) Anmelder: Fraunhofer-Gesellschaft zur Förderung der angewandten Forschung e.V., 80686 München (DE)
(72) Erfinder: Nagel, Krees, 38102 Braunschweig (DE); Eichler, Marko, 38106 Braunschweig (DE)

(57) **Zusammenfassung**

Verfahren zur Beschichtung von nano- und mikroskaligen Partikeln, bei welchem die Partikel in einem flüssigen Gas oder in einem überkritischen Fluid dispergiert werden, und die flüssige Dispersion in ein Plasma geleitet wird, wobei es erst im Plasma zum Verdampfen der Flüssigkeit kommt und im Plasma die Oberfläche modifiziert wird.

## Beschreibung

Die Erfindung betrifft ein Verfahren zum Dispergieren und Behandeln von Partikeln mittels einer Plasmaentladung. Dieses Verfahren eignet sich insbesondere zum Behandeln von Nanopartikeln, welche sich nur schwer in der Gasphase dispergieren lassen. Bevorzugtes Anwendungsgebiet ist die chemische Funktionalisierung und Kapselung von Partikeln.

Die Anwendung und Verarbeitung von feinen dispersen Feststoffen mit unterschiedlichen Größen von einigen Nanometern bis hin zu einigen Millimetern gewinnt immer stärker an Bedeutung. Die Oberflächeneigenschaften von Partikeln beeinflussen die Eigenschaften des Produktes maßgeblich. Bei den Partikeln kann es sich zum Beispiel um Pigmente, Füllstoffe in Farben, Kunststoffgranulate, Kolloide oder auch Mikrokapseln handeln. Chemisch funktionalisierte Partikel lassen sich für verschiedenste Anwendungen wie Flüssigformulierungen niedriger Viskosität, hochgefüllte Keramik-Schlicker, Multifunktions-Coatings, Pigment-Dispersionen, Farben, e-inks, Ferrofluide, Katalysatoren, elektronische Bauelemente, Bioanalytik, Diagnostik und Kunststoff-Komposite einsetzen, wobei diese Aufzählung keinesfalls vollständig ist.

Die als Ausgangsstoffe zu verwendenden Partikel neigen im trockenen Zustand für gewöhnlich zur Bildung von Agglomeraten. Die Oberfläche der Teilchen ist somit teilweise oder vollständig von anderen Teilchen verdeckt. Bei der trockenen Dispergierung der Feststoffe in der Gasphase lassen sie diese Agglomerate häufig nur zum Teil auflösen. Dies liegt an den Haftkräften zwischen den Teilchen, welche von den Feststoffeigenschaften, der Partikelgrößenverteilung, der Rauheit der Partikeloberfläche, der Partikelform, der Feuchte und von oberflächemodifizierenden Zusätzen abhängen.

Beim Dispergieren von Agglomeraten in der Gasphase werden die Agglomerate gezielt durch Strömungskräfte, Rotation, Turbulenz und Partikelstoß beansprucht, um das vollständige Dispergieren der Teilchen zu erzwingen. Dabei haben sich Verfahren wie
- Beschleunigen in einem Ejektor
- Strömung durch Düsen mit hohen Geschwindigkeiten
- Prallbeanspruchung der Agglomerate
- Strömung durch einen gekrümmten Kanal bewährt.

Als problematisch erweist sich jedoch insbesondere das Dispergieren von sehr kleinen Partikeln, da die Haftkräfte pro Fläche eher steigen und die für das Dispergieren nutzbaren Kräfte sinken. Dies hängt damit zusammen, dass das Verhältnis von Partikelmasse zur Partikeloberfläche stark abnimmt. Folglich lassen sich insbesondere Nanopartikel nicht vollständig oder nur mit großem Aufwand trocken dispergieren.

In Flüssigkeiten lassen sich Partikel durch Mischen, Rühren oder mit Ultraschall meist gut dispergieren. Zudem können der Emulsion noch oberflächenmodifizierende Verbindungen zugegeben werden. Technisch sind diese Methoden bereits sehr weit ausgereift und kommerziell erhältlich. Darüber hinaus lassen sich durch Zugabe von Prekursoren auf den Partikeln in der Emulsion Schichten abscheiden. Diese sind jedoch häufig nur wenige Atomlagen dick und von daher sehr empfindlich, insbesondere bei einer trockenen Weiterverarbeitung der Partikel. Darüber hinaus gibt es Anwendungen, bei denen die Schichten eine Mindestdicke benötigen, um zum Beispiel zu isolieren, die Leitfähigkeit zu erhöhen, optische Eigenschaften zu verändern, chemische Reaktionen zu verhindern oder zu ermöglichen oder mechanischen Beanspruchungen Stand zu halten.

Eine Möglichkeit, Partikel in der Gasphase zu dispergieren und im Plasma zu behandeln, ist das RESS-Verfahren (Rapid Expansion of a Supercritical Solution). Bei diesem Verfahren werden die Teilchen in einem überkritischen Fluid (z.B. Kohlendioxid) dispergiert. Beim Entspannen der Emulsion verdampft das Lösungsmittel und die Partikel bleiben deagglomeriert in der Gasphase zurück. Um die Partikel mit Niederdruck-Plasmen zu behandeln, werden Pumpen hoher Leistung benötigt. Behandlungen mit Plasmen bei Atmosphärendruck führen zu Beschichtungen auf den Elektroden mit Partikeln und Prekursor.

Der vorliegenden Erfindung liegt die Aufgabe zu Grunde, ein Verfahren zur Oberflächenbehandlung von nano- und mikroskaligen Partikeln zur Verfügung zu stellen, bei dem die zuvor beschriebenen Nachteile bei der Dispergierung und Behandlung vermieden werden. Die Beschichtungen sollen zur Erzielung möglichst vielfältiger Materieeigenschaften für die diversen Einsatzbereiche nano- und mikroskaliger Teilchen funktionelle Gruppen und/oder verschiedene physikalische Eigenschaften aufweisen. Der Gehalt an funktionellen Gruppen und die Dicke der Schicht soll sich in einfacher Weise durch die Reaktionspartner und die Beschichtungsbedingungen steuern lassen.

Die Aufgabe wird erfindungsgemäß gelöst, in dem die Partikel in einem verflüssigtem Gas gelöst werden. Dabei kann es sich wohl um inerte Gase wie zum Beispiel Edelgase oder auch reaktive Gase wie zum Beispiel Sauerstoff oder Chlor handeln. Alternativ können auch überkritische Fluide, wie zum Beispiel Kohlendioxid verwendet werden.

Die Partikel werden in dem flüssigen Gas oder dem überkritischen Fluid dispergiert und durch eine Kapillare (1) in ein Atmosphärendruckplasma (2) geleitet. In diesem wird das flüssige Gas verdampft. Durch die geeignete Zugabe eines Arbeitsgases (5), welches mit einem Prekursor angereichert werden kann, kann der Gasstrom und die Plasmaausbildung gezielt beeinflusst werden.

Das Plasma selbst kann durch verschiedene Verfahren generiert werden. Neben Mikrowellenanregung, RF-Anregung, Barrierenentladung oder klassischen Coronaentladung (Spitze-Platte) ist die Bogenentladung besonders geeignet, da diese besonders hohe Energiedichten im Plasma zur Verfügung stellen kann. Bogenentladungen können sowohl mit Gleichspannung als auch mit Wechselspannung betrieben werden. Ein Pulsen der Spannungsversorgung kann sich sowohl auf die Plasmaausbildung als auch auf den Behandlungserfolg vorteilhaft auswirken.

Um eine Kontamination der Elektroden durch Prekursoren und Partikel zu verhindern, können sie mit einem Schutzgas so angeblasen werden (6), so dass ein Kontakt mit dem Prekursor und den Partikeln vermieden wird.

Eine Einspeisung von Arbeitsgas ist häufig vorteilhaft, um die Ausbildung des Plasmas und des Partikelgasstromes zu beeinflussen. Wird der Prekursor mit dem Arbeitsgas eingebracht, ist die Strömung so zu gestalten, dass sich das Arbeitsgas mit dem Gemisch aus Partikel und verdampften flüssigem Gas ausreichend vermischen, so dass ein gleichmäßiger Behandlungserfolg auf den Partikeln erreicht wird. Dies lässt sich durch gezieltes Einblasen des Arbeitsgases oder durch die Verwendung von Drallplatten, Strömungsbegrenzern und Strömungswiderständen erreichen.

Die Zuführung der Dispersion erfolgt insbesondere beim Verwenden von überkritischen Fluiden durch eine Kapillare, um zu verhindern, dass sich die Dispersion schon vor Erreichen des Plasmas expandiert. Die Kapillare kann am Ausgang mit einem Strömungsbegrenzer oder einer Düse versehen werden. Beim Einsatz von verflüssigtem Gas kann auch eine Kapillare verwendet werden, es reicht jedoch, einen Flüssigkeitsstrahl aus der Dispersion durch einen Auslass zu formen, wobei der Flüssigkeitsstrahl direkt auf das Plasma trifft und dort verdampft.

Der Prekursor für die Behandlung der Partikel kann auch unabhängig vom Arbeitsgas eingebracht werden. Dies kann zum Beispiel durch Einblasen oder Einspritzen in den Plasmabereich erfolgen. Eine weitere Möglichkeit ist das Einbringen des Prekursors in den Gasstrom, nach dem die Partikel den Plasmabereich verlassen haben. Die reaktive Oberfläche der Partikel kann dann mit dem Prekursor reagieren, ohne dass dieser durch das Plasma zersetzt wird.

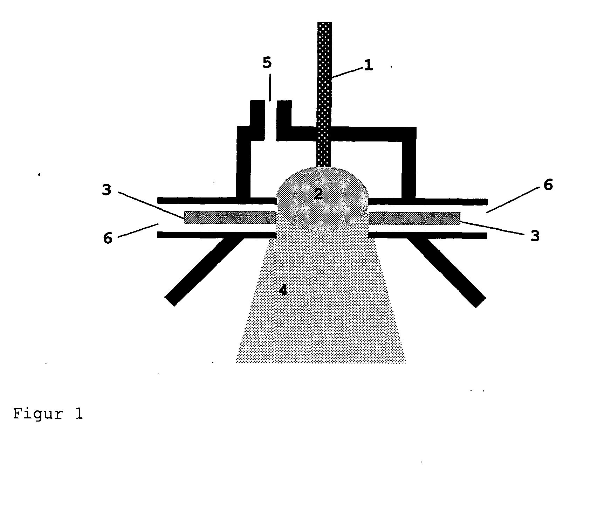

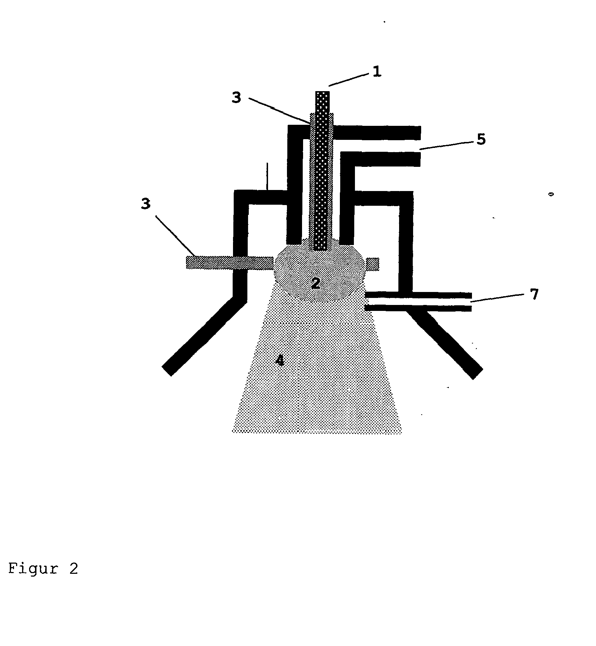

Zeichnung 2 zeigt einen axialsymmetrischen Aufbau, bei dem die Elektroden (3) ringförmig ausgeführt sind. Das Arbeitsgas (5) ist nichtbeschichtend. Der Prekursor (7) wird hinter der Plasmaszone in den Teilchenstrom der aktivierten Partikel eingeblasen.

In einer vorteilhaften Weiterbildung des Verfahrens können auch mehrere Plasmazonen eingesetzt werden, welche vom Partikelstrom nacheinander durchlaufen werden. Dadurch können auch Mehrfachbeschichtungen realisiert werden.

Als eine weitere Möglichkeit kann der Prekursor auch der flüssigen Dispersion direkt zugesetzt werden. Dies hat den Vorteil, dass sich der Prekursor sehr gleichmäßig mit den Partikeln im Plasma verteilt.

Die behandelten Partikel können nach der Behandlung mit einem Filter oder einem Zyklon aufgefangen werden. Eine andere Möglichkeit besteht darin, den Gasstrom mit den Partikeln durch eine Flüssigkeit zu leiten, so dass sich die Partikel in der Flüssigkeit anreichern können. Dies kann zum Beispiel mit Gaswaschflaschen realisiert werden. Dabei kommen sowohl Flüssigkeiten in Frage, welche sich gegenüber der Partikeloberfläche inert verhalten, als auch Flüssigkeiten, welche mit der Partikeloberfläche reagieren und diese modifizieren.

In einer weiteren vorteilhaften Weiterbildung des Verfahrens können die Partikel nach der Plasmabehandlung auch auf einer Oberfläche abschieden werden, so dass diese beschichtet wird. Dies kann so umgesetzt werden, dass das Plasma die Oberfläche berührt oder der die Oberfläche mit dem Plasma nicht in Kontakt kommt. Kombination von mehreren Plasmazonen ist dabei ebenfalls möglich.

Um die Oberflächenmodifizierung der Partikel zu optimieren und geeignete Prozessbedingungen zu schaffen, kann es von Vorteil sein, Bereiche der Behandlungseinrichtung zu temperieren. Die Zuführung der Dispersion durch eine Kapillare oder ähnliches kann temperaturisoliert oder temperiert werden, um eine optimale Zuführung der Dispersion in das Plasma zu erreichen.

Das eingesetzte verflüssigte Gas kann in einem geschlossenen Kreislauf zurück gewonnen werden. Vorteilhaft ist der Einsatz von flüssigen Gasen, welche auf Grund ihrer Umweltverträglichkeit direkt in die Abluft gegeben werden können.

Nachfolgend soll die Erfindung ohne Beschränkung des allgemeinen Erfindungsgedankens in einem Beispiel erläutert werden.

Mit der zuvor beschriebenen Einrichtung werden Titandioxid-Partikel mit einen Durchmesser von 200 nm behandelt. Die Partikel werden in flüssigem Stickstoff dispergiert und mit einer Kapillare mit dem Innendurchmesser von 1.5 mm in das Plasma geleitet. Das Plasma wird
durch eine Bogenentladung erzeugt, welche mit Wechselspannung betrieben wird. Als Arbeitsgas werden 30 Standardliter Stickstoff zugeführt. Das Arbeitsgas wird
vor dem Einströmen in die Apparatur durch eine Bubblerflasche mit dem Prekursor Tetramethoxysilan geleitet. Hinter dem Behandlungsbereich werden die

Partikel mit einem Filter aufgefangen. Die Partikel wurden danach im Raster-Elektronen-Mikroskop untersucht. Mittels EDX-Analyse wurde im Gegensatz zu den unbeschichteten Partikeln bei den beschichteten Partikeln
eine Siliziumkonzentration von 1,5 % gemessen.

### Bezugszeichenliste

1. Kapillare mit Dispersion
2. Plasma
3. Elektroden
4. Gasstrom mit modifizierten Partikeln
5. Arbeitsgaszufuhr
6. Schutzgaszufuhr
7. Prekursorgaszufuhr

## Patentansprüche

1. Verfahren zur Beschichtung von nano- und mikroskaligen Partikeln, **dadurch gekennzeichnet, dass** die Partikel in einem flüssigen Gas oder in einem überkritischen Fluid dispergiert werden, dass die flüssige Dispersion in ein Plasma geleitet wird, dass es erst im Plasma zum Verdampfen der Flüssigkeit kommt und dass im Plasma die Oberfläche modifiziert wird.

2. Verfahren nach Anspruch 1, bei dem das Plasma bei Atmosphärendruck oder bei höheren Drücken als bei Atmosphärendruck brennt.

3. Verfahren nach mindestens einem der vorhergehenden Ansprüche, **dadurch gekennzeichnet, dass** die Elektroden durch anblasen mit einem Gas vor Kontamination mit Partikeln und Prekursoren geschützt werden.

4. Verfahren nach mindestens einem der vorhergehenden Ansprüche, **dadurch gekennzeichnet, dass** es sich bei dem Plasma um eine Bogenentladung handelt.

5. Verfahren nach mindestens einem der vorhergehenden Ansprüche, **dadurch gekennzeichnet, dass** als flüssiges Gas Stickstoff, Sauerstoff, Wasserstoff, Fluor oder Chlor eingesetzt wird.

6. Verfahren nach mindestens einem der vorhergehenden Ansprüche, **dadurch gekennzeichnet, dass** als überkritisches Fluid Kohlendioxid verwendet wird.

7. Verfahren nach mindestens einem der vorhergehenden Ansprüche, **dadurch gekennzeichnet, dass** ein Prozessgasstrom verwendet wird, welcher zur Ausbildung des Plasmas beiträgt.

8. Verfahren nach mindestens einem der vorhergehenden Ansprüche, **dadurch gekennzeichnet, dass** das Arbeitsgas oder Bestandteile des Arbeitsgases zur Oberflächenmodifizierung beitragen.

9. Verfahren nach mindestens einem der vorhergehenden Ansprüche, **dadurch gekennzeichnet, dass** die flüssige Dispersion ein oder mehrere Bestandteile enthält, welche zur Modifizierung der Oberfläche beitragen.

10. Verfahren nach mindestens einem der vorhergehenden Ansprüche, **dadurch gekennzeichnet, dass** das Plasma bei einer Frequenz zwischen 10 kHz und 100 kHz betrieben wird.

11. Verfahren nach mindestens einem der vorhergehenden Ansprüche, **dadurch gekennzeichnet, dass** das Plasma ein Radiofrequenzplasma ist.

12. Verfahren nach mindestens einem der vorhergehenden Ansprüche, **dadurch gekennzeichnet, dass** das Plasmas bei Gleichspannung betrieben wird.

13. Verfahren nach mindestens einem der vorhergehenden Ansprüche, **dadurch gekennzeichnet, dass** das Plasma gepulst wird.

14. Verfahren nach mindestens einem der vorhergehenden Ansprüche, **dadurch gekennzeichnet, dass** die im Plasma umgesetzte elektrische Leistung im Bereich von 1 W bis 10 kW liegt, bevorzugt im Bereich von 50 W bis 1 kW.

15. Verfahren nach mindestens einem der vorhergehenden Ansprüche, **dadurch gekennzeichnet, dass** das Plasma gepulst wird.

16. Verfahren nach mindestens einem der vorhergehenden Ansprüche, **dadurch gekennzeichnet, dass** die Partikel nach der Oberflächenmodifizierung in einem Filter aufgefangen werden

17. Verfahren nach mindestens einem der vorhergehenden Ansprüche, **dadurch gekennzeichnet, dass** der Gasstrom mit den Partikeln nach der Oberflächenmodifizierung in eine Flüssigkeit geleitet wird.

18. Verfahren nach mindestens einem der vorhergehenden Ansprüche, **dadurch gekennzeichnet, dass** der Gasstrom mit den Partikeln nach der Oberflächenmodifizierung in eine oder mehrere Flüssigkeiten geleitet wird und die Oberfläche dort modifiziert wird.

19. Verfahren nach mindestens einem der vorhergehenden Ansprüche, **dadurch gekennzeichnet, dass** im Bereich der Kapillare oder des Partikelgasstromes eine Temperierung erfolgt.

20. Verfahren nach mindestens einem der vorhergehenden Ansprüche, **dadurch gekennzeichnet, dass** der Auslass der Kapillare (1) mit einer Düse oder einem Strömungsbegrenzer versehen wird.

21. Verfahren nach mindestens einem der vorhergehenden Ansprüche, **dadurch gekennzeichnet, dass** die Partikel auf eine Oberfläche abgeschieden werden.

22. Verfahren nach Anspruch 21, **dadurch gekennzeichnet, dass** das Plasma die zu beschichtende Oberfläche berührt.

23. Verfahren nach mindestens einem der vorhergehenden Ansprüche, **dadurch gekennzeichnet, dass** es mehr als eine Plasmazone gibt.

24. Verfahren nach mindestens einem der vorhergehenden Ansprüche, **dadurch gekennzeichnet, dass** mehrere Oberflächenmodifikationen hintereinander durchgeführt werden.
